(19) Europäisches Patentamt
European Patent Office
Office européen des brevets

(11) **EP 4 202 541 A1**

(12) **EUROPEAN PATENT APPLICATION**

(43) Date of publication:
**28.06.2023 Bulletin 2023/26**

(21) Application number: **22172987.4**

(22) Date of filing: **12.05.2022**

(51) International Patent Classification (IPC):
**G02F 1/1335** (2006.01)

(52) Cooperative Patent Classification (CPC):
**G02F 1/133528; G02F 1/133531; G02F 1/133541;**
G02F 1/133638

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.12.2021 CN 202111581473**

(71) Applicant: **TPK Auto Tech (Xiamen) Limited**
**Xiamen, Fujian (CN)**

(72) Inventors:
- **LI, RONG-HUA**
  **Xiamen, Fujian (CN)**
- **CHEN, SHIH-HAO**
  **Zhubei, Hsinchu (TW)**
- **ZHANG, CHUN-YONG**
  **Xiamen, Fujian (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **INTEGRATED BLACK DISPLAY APPARATUS**

(57) A display apparatus includes display unit and an optical compensation film. The display unit includes an upper polarizer. The optical compensation film is located at a side of the upper polarizer facing an external environment. The optical compensation film includes a linear polarizer. An absolute value of an axial angle difference between the linear polarizer and the upper polarizer is in a range from 0 degrees to 10 degrees.

**Fig. 6**

**Description**

**FIELD OF DISCLOSURE**

The present disclosure relates to a display apparatus, especially for a display device of which a reflectance of a shield area and a reflectance of a display area are similar.

**BACKGROUND**

A current liquid crystal display apparatus usually has an apparent interface between a display region and a shielding region due to large reflectance difference between the reflectance of the display region and the reflectance of the shielding region. As such, the display apparatus has a poor appearance when the light source is turned off or is not turned on.

In some current method, the reflectance can be reduced by reducing the transmittance of the optical adhesive layer, but the brightness of the display region will be reduced. In another method, the appearance may be improved by adjusting ink color of the shielding region such that the shielding region and the display region may have uniform color. However, appearance quality is not good enough, and the shielding region may show grey color due to this color adjustment. Color differences between the display region and the shielding region obtained from CIELAB color space data (L,a,b) indicate that such method still cannot solve the problems mentioned above.

Accordingly, it is still a development direction for the industry to provide a display apparatus which can reduce the reflectance difference between the display region and the shielding region such that the interface between the display region and the shielding region can be unapparent.

**SUMMARY**

One aspect of the present disclosure is a display apparatus.

In some embodiments, the display apparatus includes display unit and an optical compensation film. The display unit includes an upper polarizer. The optical compensation film is located at a side of the upper polarizer facing an external environment. The optical compensation film includes a linear polarizer. An absolute value of an axial angle difference between the linear polarizer and the upper polarizer is in a range from 0 degrees to 10 degrees.

In some embodiments, the absolute value of the axial angle difference between the linear polarizer and the upper polarizer is in a range from 0 degrees to 5 degrees.

In some embodiments, the display apparatus further includes a display region and a shielding region, and a color difference between the display region and the shielding region is smaller than 1.

In some embodiments, when the display apparatus is not turned on, an absolute value of a difference obtained from subtracting a reflectance of the shielding region from a reflectance of the display region is smaller than 1%.

In some embodiments, opacity of the linear polarizer is smaller than 21%.

In some embodiments, opacity of the linear polarizer is smaller than 10%.

In some embodiments, the optical compensation film comprises a retardation film.

In the aforementioned embodiments, the display apparatus of the present disclosure can reduce the reflectance of the display region by disposing an optical compensation film such that the reflectance of the display region is substantially the same as the reflectance of the shielding region so as to reduce the color difference between the display region and the shielding region. With such design, the interface between the display region and the shielding region becomes unapparent so as to provide a black overall effect, and therefore such design may beautify the appearance of the backlight module of the display apparatus when the backlight module is turned off.

**BRIEF DESCRIPTION OF THE DRAWINGS**

The disclosure can be more fully understood by reading the following detailed description of the embodiment, with reference made to the accompanying drawings as follows:

Fig. 1 is a top view of a display apparatus according to one embodiment of the present disclosure;

Fig. 2 is a cross-sectional view taken along line 2-2 in Fig. 1;

Fig. 3A is a cross-sectional view of the display unit in Fig. 1;

Fig. 3B is a cross-sectional view of a display unit according to another embodiment of the present disclosure;

Fig. 3C is a cross-sectional view of a display unit according to another embodiment of the present disclosure;

Fig. 4A is a partial side view of a display apparatus in Fig. 2;

Fig. 4B is a partial side view of a display apparatus according to another embodiment of the present disclosure;

Fig. 5 is a schematic of cutting plastic films; and

Fig. 6 is a schematic of the linear polarizer and the upper polarizer that are coaxial.

## DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

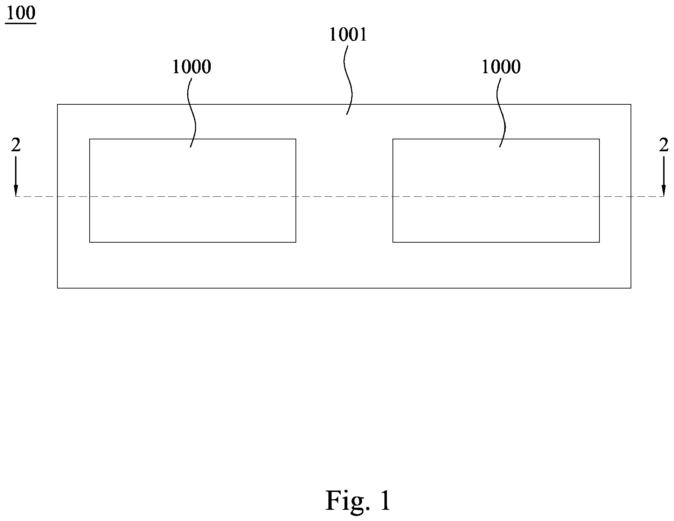

Fig. 1 is a top view of a display apparatus 100 according to one embodiment of the present disclosure. The display apparatus 100 includes at least one display region 1000 and a shielding region 1001. In the present embodiment, a number of the display regions 1000 is two, and the shielding region 1001 separates these two display regions 1000, but the present disclosure is not limited hereto. In other embodiments, the number of the display regions 1000 can be three or more, and the shielding region 1001 separates these display regions 1000.

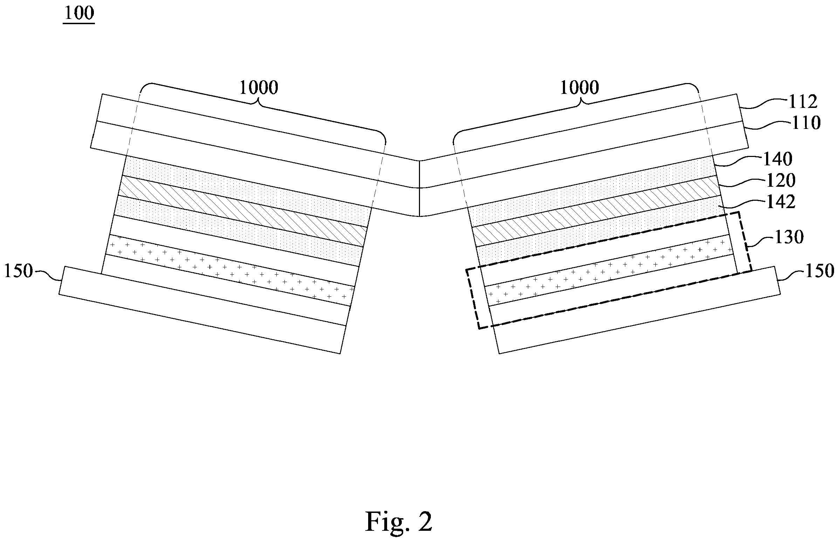

Fig. 2 is a cross-sectional view taken along line 2-2 in Fig.1. The display apparatus 100 includes a cover plate 110, an optical compensation film 120, a display unit 130, and a backlight module 150.

As shown in Fig. 2, the optical compensation film 120 is located between the cover plate 110 and the display unit 130. The optical compensation film 120 is adhered to the cover plate 110 through an optical adhesive layer 140. The display unit 130 is adhered to the optical compensation film 120 through an optical adhesive layer 142. In the present embodiment, the cover plate 110 is a curved plate, and the display apparatus 100 can be a foldable display apparatus or a curved display apparatus. In order to describe the embodiment conveniently, a mechanism(s) such as a housing that engages two display regions 1000 are omitted in Fig. 2. The optical compensation film 120 can be a linear polarizer or a circular polarizer. The circular polarizer is a combination of a linear polarizer and a retardation film. The retardation film can be a $1/4\lambda$ retardation film. The optical compensation film 120 is translucent.

The display apparatus 100 may include a surface treatment layer 112. The surface treatment layer 112 is located on a surface of the cover plate 110 facing away from the optical compensation film 120. In some embodiments, the surface treatment layer 112 can be an anti-reflection film. In some embodiments, the surface treatment layer 112 can be an anti-fingerprint film. In some embodiments, the surface treatment layer 112 can be an anti-glare film. In some embodiments, the surface treatment layer 112 can be a combination of two or three of the abovementioned films. The surface treatment layer 112 is disposed on the surface of the cover plate 110 facing away from the optical compensation film 120 through evaporation, sputtering, or adhesion.

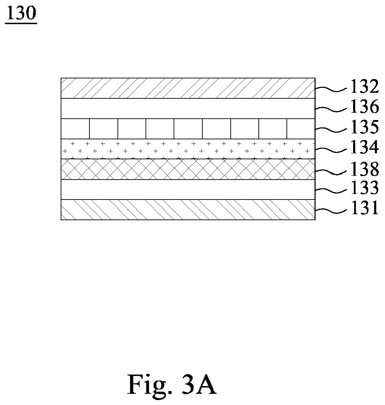

The display unit 130 can be an in-cell display unit, an on-cell display unit, or an out-cell display unit. The detailed structures will be described in the following paragraphs and accompanying Figs. 3A to 3C.

Fig. 3A is a cross-sectional view of the display unit 130 in Fig. 1. The display unit 130 includes a bottom polarizer 131, an upper polarizer 132, a thin film transistor array substrate 133, a liquid crystal layer 134, a color filter layer 135, a cover glass substrate 136, and a sensor layer 138. In the present embodiment, the display unit 130 is an in-cell display unit. The sensor layer 138 is located between the thin film transistor array substrate 133 and the liquid crystal layer 134, and the cover glass substrate 136 is a dummy glass. A polarizing direction of the bottom polarizer 131 is orthogonal to a polarizing direction of the upper polarizer 132. The bottom polarizer 131, the upper polarizer 132, the thin film transistor array substrate 133, the liquid crystal layer 134, the color filter layer 135, and the cover glass substrate 136 can be combined through optical adhesive layers (not shown) alternatively, and the description is not repeated hereinafter.

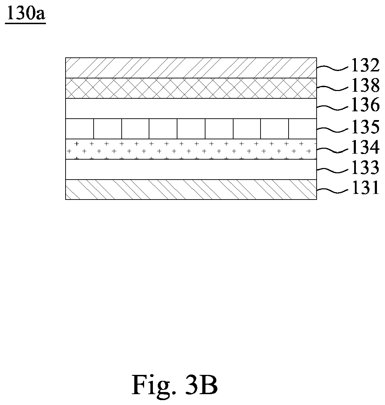

Fig. 3B is a cross-sectional view of a display unit 130a according to another embodiment of the present disclosure. In the present embodiment, the display unit 130a is an on-cell display unit. The sensor layer 138 is disposed between the cover glass substrate 136 and the upper polarizer 132.

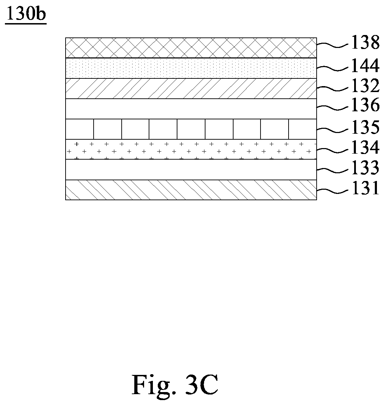

Fig. 3C is a cross-sectional view of a display unit 130b according to another embodiment of the present disclosure. In the present embodiment, the display unit 130b is an out-cell display unit. The sensor layer 138 is adhered on the upper polarizer 132 through another optical adhesive layer 144. In another embodiment, the sensor layer 138 can be displaced by a glass substrate without any circuits (i.e., dummy glass). Or, a glass substrate is adhered on the upper polarizer 132 through the optical adhesive layer 144, and then the sensor layer 138 is disposed (or adhered through an adhesive layer or an optical adhesive layer) on the glass substrate later.

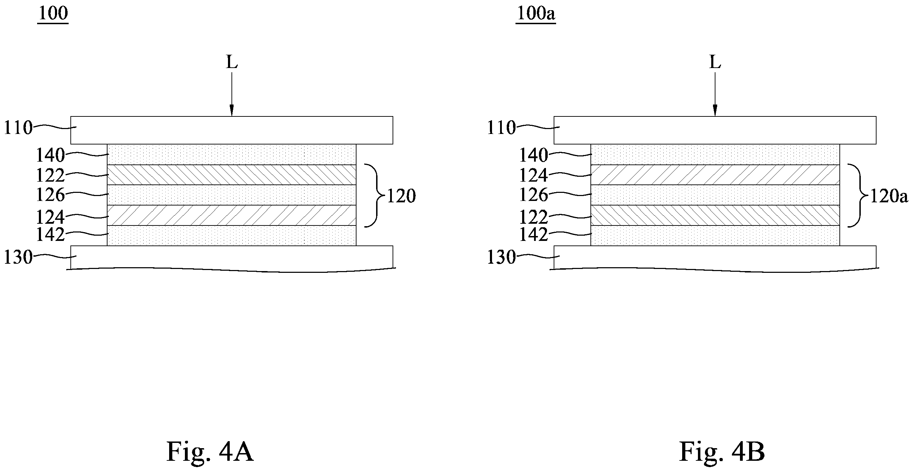

Fig. 4A is a partial side view of a display apparatus 100 in Fig. 2. In the present embodiment, the optical compensation film 120 is a circular polarizer. A linear polarizer 122 and a retardation film 124 are adhered through an optical adhesive layer 126. The linear polarizer 122 is located between the optical adhesive layer 126 and the cover plate 110. The optical compensation film 120 is adhered to the display unit 130 through an optical adhesive layer 142. Alternatively stated, the optical compensation film 120 is disposed on a side of the upper polarizer 132 of the display unit 130 facing the external environment.

For example, when the upper polarizer 132, the linear polarizer 122, or the circular polarizer are sold to the manufacturers by the suppliers, the upper polarizer 132, the linear polarizer 122, or the circular polarizer are in a bundle. Since the upper polarizer 132, the linear polarizer 122, or the circular polarizer are plastic films, the upper polarizer 132, the linear polarizer 122, or the circular polarizer will be stretched in a transverse direction (TD) and a machine direction (MD) during the stretch process. Since the upper polarizer 132, the linear polarizer 122, or the circular polarizer are optical films, an angle of 0 degree or more may be formed. The angles may differ based on the manufacturing process of each manufacturer and properties of materials.

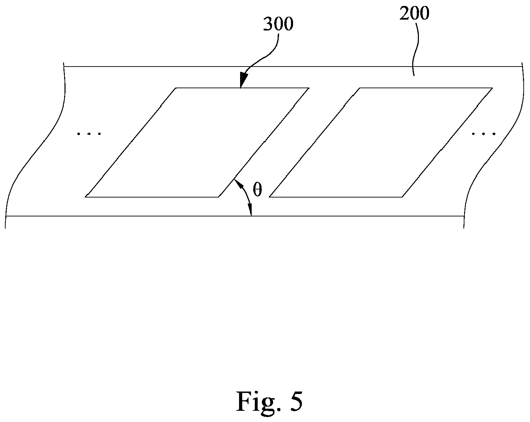

Fig. 5 is a schematic of cutting plastic films 200. The plastic film 200 herein refers to an arbitrary optical film such as a circular polarizer, an upper polarizer, a bottom polarizer, or a linear polarizer, but the present disclosure is not limited hereto. The plastic film 200 provided by the suppliers has an angle, and the plastic film 200 has a default angle when the plastic film 200 is placed on a cutting machine. A cutter 300 of the cutting machine is rotated for a cutting angle Θ relative to a base direction of the plastic film 200. The base direction is determined by the position where the plastic film 200 is placed thereon, and therefore the base direction can be the TD direction or the MD direction. The cutting angle Θ is a sum of the default angle and the angle aforementioned. Therefore, the angle of a plastic film being cut is the default angle. For example, if the plastic film 200 being cut or that has been cut has an angle of 45 degrees, the cutting angle Θ is a sum of 45 degrees and the angle aforementioned.

An angle measurement of the plastic film 200 or the plastic film 200 being cut or that has been cut (arbitrary optical thin film) is performed by an absorbing axis detector, whole-width optical film axis detector, polarizer axis detector, etc. A method of determining the angle measurement includes disposing the plastic film 200 on a rotation platform, providing a light by a light source module, receiving the light that has passed through the plastic film 200 and the rotation platform by an optical receiving sensor module, and transferring information received by the optical receiving sensor module to a control module such that an angle of the plastic film 200 can be derived from the control module.

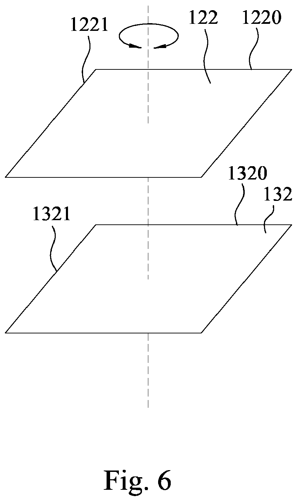

Fig. 6 is a schematic of the linear polarizer 122 and the upper polarizer 132 that are coaxial. Reference is made to Fig. 2, Fig. 3A, and Fig. 4A. In the present embodiment, the linear polarizer 122 and the upper polarizer 132 are substantially coaxial. The coaxial angle of the linear polarizer 122 and the upper polarizer 132 is in a range from -5 degrees to +5 degrees, and the opacity of the upper polarizer 132 is acceptable.

For example, the plastic films being cut or that have been cut are a linear polarizer 122 and the upper polarizer 132 respectively, and the default angle is 45 degrees. The linear polarizer 122 includes at least one first long edge 1220 and at least one second short edge 1221, and the first long edge 1220 is perpendicular to the second short edge 1221. The upper polarizer 132 includes at least one third long edge 1320 and at least one fourth short edge 1321, and the third long edge 1320 is perpendicular to the fourth short edge 1321. Therefore, when the linear polarizer 122 is disposed on the upper polarizer 132, the first long edge 1220 of the linear polarizer 122 is aligned with the third long edge 1320 of the upper polarizer 132, and the second short edge 1221 of the linear polarizer 122 is aligned with the fourth short edge 1321 of the upper polarizer 132. As such, the linear polarizer 122 and the upper polarizer 132 are coaxial, and therefore the coaxial angle between the linear polarizer 122 and the upper polarizer 132 can be zero degrees. However, as described above, the coaxial angle may not be zero degrees due to the angle of the plastic film, the cutting angle, or the manufacturing deviation.

For example, when the linear polarizer 122 and the upper polarizer 132 are coaxial, an angle of the linear polarizer 122 relative to the upper polarizer 132 obtained by rotating clockwise is a positive angle, and the aforesaid angle obtained by rotating counter-clockwise is a negative angle. Specifically, an absolute value of the difference of the axial angle between the linear polarizer 122 and the upper polarizer 132 is in a range from 0 degrees to 5 degrees. Under such condition, as shown in Fig. 2 and Fig. 4A, when the backlight module 150 is turned on, the light provided by the backlight module 150 passes through the display unit 130 (the display units 130, 130a, 130b shown in Fig. 3A to Fig. 3C are included herein, but the disclosure is not limited hereto), the upper polarizer 132, and the linear polarizer 122 sequentially. Power loss may occur when the light passes through the aforementioned display unit 130, the upper polarizer 132, and the linear polarizer 122. However, the power loss is not emphasized in the present disclosure.

If the absolute value of the difference of the axial angle between the linear polarizer 122 and the upper polarizer 132 is greater than the range from 0 degrees to 5 degrees, no light or a small amount of the light from the backlight module 150 can pass through the linear polarizer 122 when the backlight module 150 is turned on such that the light intensity is reduced. As shown in Table 1, which describes the opacity relative to angle change between the linear polarizer 122 and the upper polarizer 132. When the coaxial angle between the linear polarizer 122 and the upper polarizer 132 is zero degrees, the transmittance obtained from multiple to dozens of experiment results is from 0% to 3%, which means that the light intensity if best or stronger when the backlight module 150 is turned on. When the coaxial angle between the linear polarizer 122 and the upper polarizer 132 gradually increased from 5 degrees, the light intensity is reduced. As described above, when the consumer display device is turned on, the opacity measured from the side of the linear polarizer 122 facing the external environment of a qualified product should be smaller than 10%. As shown in Table 1, when the linear polarizer 122 and the upper polarizer 132 are coaxial and the absolute value of the difference of the axial angle between the linear polarizer 122 and the upper polarizer 132 is in the range from zero degrees to 5 degrees, the opacity of the linear polarizer 122 is under 10%. Therefore, such results are acceptable for a consumer product. When the absolute value of the coaxial angle difference is greater than 5 degrees, the opacity of the linear polarizer 122 is greater than 10%. Therefore, such results are not acceptable for a consumer product. However, some consumer display products may require that the opacity of the linear polarizer 122 be under 21%.

TABLE 1

| Absolute of angle change (°) | 0 | 5 | 10 | 15 |
|---|---|---|---|---|
| Opacity (%) | 0-3 | 7-9 | 19-21 | 33-35 |

Opacity relative to angle change between the linear polarizer and the upper polarizer

Reference is made to Fig. 1, Fig. 2, and Fig. 4A. A linear polarized light is formed after an external non-polarized light L passes through the linear polarizer 122. A polarized light with 1/4 wavelength phase difference is formed after the light L that has been passed through the linear polarizer 122 and the retardation film 124 and formed a circular polarized light. Specifically, the polarized light has a phase difference of 145 degrees ± 10 degrees or 140 degrees ± 10 degrees. Light has wave-particle duality, and therefore the light is considered as magnetic wave when phase difference is discussed. The difference between phases of two lights is the phase difference. After the circular polarized light passes through the reflective medium in the display apparatus 100 (such as a reflector, not shown), a reversed circular polarized light is formed (for example, left-handed to right-handed). Therefore, after the reflected circular polarized light passes through the retardation film 124 again, a linear polarized light along a reversed direction of the optical axial direction of the linear polarizer 122 is formed. As such, the light L cannot pass through the linear polarizer 122, thereby reducing the reflectance of the display region 1000. Accordingly, the interface between the display regions 1000 and the shielding region 1001 will be unapparent so as to beautify the appearance of the backlight module 150 of the display apparatus 100 when the backlight module 150 is turned off.

Fig. 4B is a partial side view of a display apparatus 100a according to another embodiment of the present disclosure. The display apparatus 100a is substantially the same as the display apparatus 100, and the difference is that the optical compensation film 120a of the display apparatus 100a is arranged in a reversed direction of the direction in which the optical compensation film 120 is stacked. In other words, the retardation film 124 of the optical compensation film 120a is located between the optical adhesive layer 126 and the cover plate 110. The display apparatus 100a has the same technical advantages as those of the display apparatus 100, and therefore the description is not repeated hereinafter.

Table 2 is data of color difference. When the value of the color difference (ΔE) is higher, the color is more distorted compared to the true color. Color difference of a perfect color is zero, which is not visible to the human eye. The minimum color difference that is visible to the human eye is from 1 to 2.5. If the color difference is smaller than one, the color difference cannot be observed by humans in general. As shown in Table 2, color differences of the display apparatus (numbers 1~3) without optical compensation film is about 10 based on the values of color difference (ΔE) obtained from color difference equation: $\Delta E_{ab}^* = \sqrt{(L_2^* - L_1^*)^2 + (a_2^* - a_1^*)^2 + (b_2^* - b_1^*)^2}$, which means that the interface between the display regions 1000 and the shielding region 1001 is apparent and can be observed by humans. Color differences (ΔE) of the display apparatus (numbers 4~6) with optical compensation film is reduced to less than one, and therefore such color differences cannot be observed by humans. Accordingly, the display apparatus of the present disclosure can make the interface between the display regions 1000 and the shielding region 1001 be unapparent so as to provide a black overall effect, and therefore such design may beautify the appearance of the backlight module of the display apparatus when the backlight module is turned off.

TABLE 2

| | Without optical compensation film | | | With optical compensation film | | |
|---|---|---|---|---|---|---|
| Number | 1 | 2 | 3 | 4 | 5 | 6 |
| Color difference(ΔE) | 10.285 | 10.218 | 9.094 | 0.859 | 0.629 | 0.952 |

Data of color difference

Table 3 is data of reflectance of the display apparatus without optical compensation film and the display apparatus with optical compensation film. The data of reflectance is measured by using Spectrophotometer CM-700D of Konica Minolta. Real products are used as measurement samples, and the measurements are performed at multiple points on the measurement samples. The data is an average of those measured results. There is an optical coating on the surface of the cover plate of the display apparatus, such as the aforementioned anti-reflection film, anti-fingerprint film, anti-glare film, etc. Measurement results by using higher wavelength (700 nm or more) or lower wavelength (400 nm or less) will be affected due to the optical coating, and therefore, the range of more than 700 nm or less than 400 nm are not included in the measurements.

As shown in Fig. 1, the measurement method is that five points in the display region 1000 are selected with equal distance or equal area, and reflectance is measured from those five points with measurement wavelengths. If the shielding region 1001 is not square-shaped or has a non-uniform shape, eight points in the shielding region 1001 can be selected with equal distance, and reflectance is measured from those eight points. If the shielding region 1001 has a square shape, the shielding region 1001 can be divided into long side and short side, and eight points can be selected from corners opposite the long side and the short side or positions relative to the long side and the short side for reflectance measurements.

As shown in Table 3, reflectance measurements are obtained when the display apparatus without optical compensation film and with optical compensation film are turned off. Table 3 shows reflectance of display regions and shielding regions of multiple samples measured by using visible light with wavelengths from 450 nm to 650 nm. When the display apparatuses (number 1~3) without optical compensation film are measured by using visible light with wavelengths from 450 nm to 650 nm, the reflectance difference between the display region and the shielding region of the display apparatuses without optical compensation film is significant. The preferred observation region is between 500 nm and 600 nm. 1VA in Table 3 represents the display region of sample number 1, 1NA represents the shielding region of sample number 1, and |1VA-1NA| represents an absolute value of a difference obtained from subtracting the reflectance of the shielding region from the reflectance of the display region. Similarly, the rest of the table respectively represents the display regions, the shielding regions, and the absolute value of differences of different numbered samples. As shown in Table 3, the absolute value of differences between the display region and the shielding region of the display apparatus without optical compensation film are between 1.07% ~ 1.68%. The minimum available range of the absolute value of differences between the display region and the shielding region of the display apparatus with optical compensation film is smaller than 1%, and the measured result herein is between 0.01 % ~ 0.06 %.

TABLE 3

| Reflectance (%) | Number | Display region | Shielding region | Absolute of difference value | Display region | Shield in g region | Absolute of difference value | Display region | Shielding region | Absolute of difference value |
|---|---|---|---|---|---|---|---|---|---|---|
| | | 1VA | 1NA | \|1VA-1NA\| | 2VA | 2NA | \|2VA-2NA\| | 3VA | 3NA | \|3VA-3NA\| |
| Wavelength (nm) | 450 | 2.2 | 0.56 | 1.64 | 2.18 | 0.57 | 1.61 | 2.13 | 0.62 | 1.52 |
| | 500 | 2.43 | 0.75 | 1.68 | 2.43 | 0.75 | 1.67 | 2.09 | 0.77 | 1.32 |
| | 550 | 2.05 | 0.6 | 1.45 | 2.01 | 0.58 | 1.43 | 1.87 | 0.63 | 1.24 |
| | 600 | 1.75 | 0.5 | 1.25 | 1.7 | 0.48 | 1.22 | 1.6 | 0.53 | 1.07 |
| | 650 | 2.36 | 0.57 | 1.79 | 2.23 | 0.58 | 1.65 | 2.13 | 0.66 | 1.51 |
| With optical compensation film | | | | | | | | | | |
| Reflectance (%) | Number | Display region | Shielding region | Absolute of difference value | Display region | Shielding region | Absolute of difference value | Display region | Shielding region | Absolute of difference value |
| | | 4VA | 4NA | \|4VA-4NA\| | 5VA | 5NA | \|5VA-5NA\| | 6VA | 6NA | \|6VA-6NA\| |
| Wavelength (nm) | 450 | 0.56 | 0.54 | 0.02 | 0.54 | 0.55 | 0.01 | 0.55 | 0.57 | 0.02 |
| | 500 | 0.74 | 0.72 | 0.02 | 0.76 | 0.77 | 0.01 | 0.76 | 0.75 | 0.01 |
| | 550 | 0.62 | 0.65 | 0.03 | 0.63 | 0.66 | 0.03 | 0.64 | 0.65 | 0.01 |
| | 600 | 0.49 | 0.51 | 0.02 | 0.48 | 0.54 | 0.06 | 0.49 | 0.5 | 0.01 |
| | 650 | 0.55 | 0.56 | 0.01 | 0.5 | 0.55 | 0.05 | 0.54 | 0.56 | 0.02 |

Data of reflectance of the display apparatus without optical compensation film and the display apparatus with optical compensation film

In summary, the display apparatus of the present disclosure can reduce the reflectance of the display region by disposing an optical compensation film such that the reflectance of the display region is substantially the same as the reflectance of the shielding region so as to reduce the color difference between the display region and the shielding region. With such design, the interface between the display region and the shielding region becomes unapparent so as to provide a black overall effect, and therefore such design may beautify the appearance of the backlight module of the display apparatus when the backlight module is turned off.

Although the present disclosure has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present disclosure without departing from the scope or spirit of the disclosure. In view of the foregoing, it is intended that the present disclosure cover modifications and variations of this disclosure provided they fall within the scope of the following claims.

**Claims**

1.  A display apparatus, comprising:

    a display unit comprising an upper polarizer; and
    an optical compensation film located at a side of the upper polarizer facing an external environment, wherein the optical compensation film comprises a linear polarizer,
    wherein an absolute value of an axial angle difference between the linear polarizer and the upper polarizer is in a range from 0 degrees to 10 degrees.

2.  The display apparatus of claim 1, wherein the absolute value of the axial angle difference between the linear polarizer and the upper polarizer is in a range from 0 degrees to 5 degrees.

3.  The display apparatus of claim 1 or 2, further comprising a display region and a shielding region, and a color difference between the display region and the shielding region is smaller than 1.

4.  The display apparatus of one of the preceding claims, wherein when the display apparatus is not turned on, an absolute value of a difference obtained from subtracting a reflectance of the shielding region from a reflectance of the display region is smaller than 1%.

5.  The display apparatus of one of the preceding claims, wherein an opacity of the linear polarizer is smaller than 21%.

6.  The display apparatus of claim 5, wherein an opacity of the linear polarizer is smaller than 10%.

7.  The display apparatus of one of the preceding claims, wherein the optical compensation film comprises a retardation film.

100

1001

1000                                    1000

2                                                          2

Fig. 1

EP 4 202 541 A1

Fig. 2

Fig. 3A

EP 4 202 541 A1

130a

132
138
136
135
134
133
131

Fig. 3B

EP 4 202 541 A1

130b

138
144
132
136
135
134
133
131

Fig. 3C

100

L

110

140
122
126
124
142

130

120

Fig. 4A

100a

L

110

140
124
126
122
142

130

120a

Fig. 4B

EP 4 202 541 A1

Fig. 5

Fig. 6

Europäisches
Patentamt
European
Patent Office
Office européen
des brevets

# EUROPEAN SEARCH REPORT

**Application Number**

EP 22 17 2987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/157086 A1 (CHO SEON-AH [KR] ET AL) 7 June 2018 (2018-06-07) | 1,2,7 | INV. G02F1/1335 |
| A | * paragraphs [0053], [0075], [0120] – [0124]; figures 1,2 * | 3-6 | |

TECHNICAL FIELDS
SEARCHED      (IPC)

G02F

The present search report has been drawn up for all claims

| Place of search | Date of completion of the search | Examiner |
|---|---|---|
| Munich | 12 August 2022 | Jarosch, Sebastian |

## ANNEX TO THE EUROPEAN SEARCH REPORT
## ON EUROPEAN PATENT APPLICATION NO.

**EP 22 17 2987**

This annex lists the patent family members relating to the patent documents cited in the above-mentioned European search report.
The members are as contained in the European Patent Office EDP file on
The European Patent Office is in no way liable for these particulars which are merely given for the purpose of information.

12-08-2022

| Patent document cited in search report | Publication date | Patent family member(s) | Publication date |
|---|---|---|---|
| US 2018157086 A1 | 07-06-2018 | KR 20180063960 A | 14-06-2018 |
|  |  | US 2018157086 A1 | 07-06-2018 |

EPO FORM P0459

For more details about this annex : see Official Journal of the European Patent Office, No. 12/82